# EUROPÄISCHE PATENTSCHRIFT

(11) **EP 1 492 609 B1**
(45) Veröffentlichungstag und Bekanntmachung des Hinweises auf die Patenterteilung: **11.05.2011**
(21) Anmeldenummer: 03706121.5
(22) Anmeldetag: 12.03.2003
(51) Int. Cl.: B01D 46/52

(54) **FILTERMODUL**
FILTER MODULE
MODULE FILTRANT

(30) Priorität: 09.04.2002 AT 5462002
(43) Veröffentlichungstag der Anmeldung: 05.01.2005
(73) Patentinhaber: Brain Flash-Patententwicklungs GmbH, 9900 Lienz (AT)
(72) Erfinder: EDER, Michael, A-9900 Lienz (AT)
(74) Vertreter: Torggler, Paul Norbert
(86) Internationale Anmeldenummer: PCT/AT2003/000071
(87) Internationale Veröffentlichungsnummer: WO 2003/084638

(56) Entgegenhaltungen:
- EP-A- 0 082 106
- DE-A- 3 439 255
- DE-C- 19 529 618
- GB-A- 2 140 707
- US-A- 3 744 222
- US-A- 5 141 540
- US-A- 5 601 717
- US-A- 6 162 270
- PATENT ABSTRACTS OF JAPAN Bd. 1998, Nr. 04, 31. März 1998 (1998-03-31) & JP 9 308813 A (LASER MATSUSHITA), 2. Dezember 1997 (1997-12-02)

## Beschreibung

Die vorliegende Erfindung betrifft ein Filtermodul in Form eines Hohlkörpers, wobei die Wände des Hohlkörpers aus in einem Recycleprozess zerkleinerbaren und/oder auflösbaren, nichtmetallischen Material bestehen, wobei das zerkleinerbare und/oder auflösbare Material ein Papierstoff - vorzugsweise Karton, Papier oder Pappe - oder ein fasriges Material - vorzugsweise Holz oder Pressspanmaterial - ist, und wobei zumindest zwei annähernd parallel zueinander, in Richtung des eintretenden Luftstromes unmittelbar aufeinanderfolgend angeordnete Wände, Öffnungen aufweisen, die auf in Richtung des eintretenden Luftstromes aufeinanderfolgenden Wänden kleiner werden und/oder versetzt zueinander angeordnet sind.

Filtervorrichtungen sind insbesondere für Sprühkabinen, bei denen der große Teil des nicht am Sprühobjekt haften gebliebenen Sprühmaterials, die Luft in der Sprühkabine kontaminiert, seit längerem bekannt. Die US 6,162,270 offenbart beispielsweise ein Filtersystem, in das Filtermodule einsetzbar sind, zur Reinigung der von der Sprühkabine abgeführten Luft. Die dabei verwendeten Filtermodule sind nach Bedarf entnehmbar und chemisch oder thermisch reinigbar. Je nach verwendeter Reinigungsart bestehen die Filtermodule aus hochtemperaturresistentem (beispielsweise Metalle) oder chemischresistentem (beispielsweise glasfaserverstärkter Kunststoff) Material. Problematisch ist in diesem Zusammenhang, dass für die Reinigung der Filtermodule eigene Vorrichtungen vorzusehen sind, was technisch und wirtschaftlich aufwendig ist.

In der GB 2 140 707 A sowie in der US 3,744,222 sind Prallabscheider für Sprühkabinen mit aufeinanderfolgenden Prallwänden beschrieben, welche aus Papier, Pappe oder Kartinmaterial hergestellt werden können und wobei durch eine versetzte Anordnung von Durchlassöffnungen der Prallwände ein partikelbeladener Luftstrom gereinigt werden kann. Nach erfolgter Sättigung müssen die Prallabscheider als Ganzes ausgetauscht und ersetzt werden.

Aufgabe der Erfindung ist es, ein Filtermodul zu schaffen, das unter geringem technischen Aufwand und mit niedrigen Kosten auswechselbar ist.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Wirtschaftlich vorteilhaft ist dabei, dass für diese Materialien in der heutigen Wirtschaft bereits bestehende Recyclekreisläufe in Anspruch genommen werden können, sodass keine zusätzlichen Kosten für die Schaffung von Recycleanlagen anfallen. Technisch vorteilhaft ist dabei, dass erfindungsgemäße Filtermodule unter geringen Kosten hergestellt werden können.

Besteht das gesamte Filtermodul aus recyclebarem Material, so kann es nach Verwendung als Ganzes in einer günstigerweise bereits beim Verkauf mitgelieferten Rücksendeverpackung an den Hersteller der Filterbox zurückgeschickt und von diesem als Ganzes dem Recyclingkreislauf zugeführt werden. Dies verringert die Gefahr einer Kontamination der Umwelt durch das Austreten von giftigem Material aus dem Filtermodul.

Die Verwendung von Papierstoff hat den Vorteil, dass ein derartig hergestelltes Filtermodul ein sehr geringes Eigengewicht aufweist und dem bereits bestehenden Altpapierzyklus zum Recycling zugeführt werden kann.

Fasrige Materialien zeichnen sich durch ihre geringen Anschaffungskosten bei günstigen mechanischen Eigenschaften aus. Durch seinen hohen Brennwert kann das vorzugsweise verwendete Holz beim Recyclingprozess zur Herstellung von Fernwärme verwendet werden, was die Umweltfreundlichkeit eines erfindungsgemäßen Filtermoduls noch erhöht.

Eine weitere vorteilhafte Ausführungsform der Erfindung ergibt sich dadurch, dass das zerkleinerbare und/oder auflösbare Material ein biologisch abbaubares Material ist. Dies gestattet die Nutzung bereits vorhandener Vorrichtungen zum biologischen Abbau eines erfindungsgemäßen Filtermoduls nach Verwendung.

Eine weitere vorteilhafte Ausführungsform der Erfindung ergibt sich dadurch, dass der Hohlkörper annähernd quaderförmig ist. Diese Form eignet sich besonders gut, um durch einen Faltvorgang hergestellt zu werden. Derart hergestellte Filtermodule können im gefalteten Zustand vom Hersteller zum Konsumenten gebracht werden, was Transportkosten einspart.

Eine weitere vorteilhafte Ausführungsform der Erfindung ergibt sich dadurch, dass die kleinste Seite des Hohlkörpers annähernd halb so groß wie seine größte Seite ist. Dadurch wird erreicht, dass das Filtermodul genügend Volumen zur vollen Entfaltung seiner Filterwirkung aufweist.

Eine weitere vorteilhafte Ausführungsform der Erfindung ergibt sich dadurch, dass an zumindest einer Außenseite des Hohlkörpers wenigstens ein Griff versenkt herausschwenkbar angebracht und/oder ausgebildet ist. Dies vereinfacht das Auswechseln von Filtermodulen nach Gebrauch. Dadurch, dass der Griff versenkt angebracht und/oder ausgebildet ist, wird dieser vor Beschädigung gesichert und eine einfache stapelbare Lagerung ermöglicht. Durch den Griff ist wenigstens eine Kammer des Hohlkörpers öffenbar. Dies ermöglicht es, in der Kammer befindliches Filtermaterial auszuwechseln, und so die Lebensdauer des gesamten Filtermoduls zu verlängern.

Eine weitere vorteilhafte Ausführungsform der Erfindung ergibt sich dadurch, dass wenigstens eine Wand des Hohlkörpers zumindest teilweise imprägniert ist. Dies erhöht die Lebensdauer eines erfindungsgemäßen Filtermoduls.

Gemäß der Erfindung ist vorgesehen, dass zumindest zwei annähernd parallel zueinander angeordnete, in Richtung des eintretenden Luftstromes unmittelbar aufeinanderfolgende Wände Filteröffnungen aufweisen, die in Richtung des eintretenden Luftstroms auf aufeinanderfolgenden Wänden kleiner werden und/oder versetzt zueinander angeordnet sind (Labyrinthsystem). Dadurch wird der sogenannte Blendeffekt verhindert, bei dem das aus der Luft filtrierte Material eingangsseitig angebrachte Filterschichten verstopft und so die gesamte Filterleistung des Filtermoduls verringert.

Eine weitere vorteilhafte Ausführungsform der Erfindung ergibt sich dadurch, dass in zumindest eine Kammer des Hohlkörpers zumindest ein Beutel mit Filtermaterial einbringbar ist. Durch das eingebrachte Filtermaterial erhält das Filtermodul eine Feinfilterfunktion. Diese Filterbeutel können in unterschiedlichen Varianten hergestellt werden. Denkbar sind zum Beispiel - aber nicht ausschließlich - Filterbeutel, die Filterplatten, Filterkugeln, loses Filtermaterial, Filterkohle, Holzwolle oder biologisches Filtermaterial beinhalten.

Eine weitere vorteilhafte Ausführungsform der Erfindung ergibt sich dadurch, dass zumindest ein Beutel mit Filtermaterial in wenigstens eine, in Richtung des Luftstroms nach den zumindest zwei annähernd parallel zueinander angeordneten Wänden angeordneten, Kammer einbringbar ist. Dies kombiniert die durch das Labyrinthsystem erzielte Grobfilterfunktion mit der durch den Filterbeutel erzielten Feinfilterfunktion und ergibt so eine optimale Filterfunktionsweise.

Eine weitere vorteilhafte Ausführungsform der Erfindung ergibt sich dadurch, dass zumindest eine Kammer des Hohlkörpers wenigstens teilweise mit Filtermaterial gefüllt ist. Dadurch kann beispielsweise in genormten Säcken angeliefertes Filtermaterial diesen entnommen und in der gewünschten Menge in das Filtermodul eingebracht werden.

Bei herkömmlichen, großflächigen Filtersystemen gibt es das Problem, dass einstückig ausgebildetes Filtermaterial ungleichmäßig kontaminiert wird. Hat der Kontaminationswert in einem beschränkten Gebiet des einstückigen Filtermaterials den vorgegebenen Grenzwert überschritten, muss das gesamte Filtermaterial ausgewechselt werden. Gemäß der Erfindung kann vorgesehen sein, dass der Korpus des Filtersystems Einschübe für Filtermodule aufweist.

Wirtschaftlich vorteilhaft ist daran, dass nur die stark kontaminierten Filtermodule aus dem Filtersystem entnommen und entsorgt werden müssen.

Eine vorteilhafte Ausführungsform der Erfindung ergibt sich dadurch, dass am Korpus des Filtersystems ein Gebläse angeordnet ist. Durch die vom Gebläse erzeugte Saugwirkung erhöht sich die Menge der durch das Filtersystem hindurchtretenden Luft.

Eine weitere vorteilhafte Ausführungsform der Erfindung ergibt sich dadurch, dass der Korpus des Filtersystems zwei Kammern aufweist, wobei eine der beiden Kammern mit dem Gebläse verbunden ist. Dies ermöglicht es, in die eine der beiden Kammern Filtermodule einzuschieben, während die andere der beiden Kammern mit dem Gebläse verbunden ist. Eine weitere vorteilhafte Ausführungsform dieser Erfindung ergibt sich dadurch, dass die Fütermodule in eine Kammer bis zu den Anschlägen einschiebbar sind und die andere Kammer mit dem Gebläse verbunden ist. Dadurch wird verhindert, dass sich die Filtermodule durch die Saugwirkung des Gebläses zu weit in das Filtersystem hineinbewegen. Dadurch, dass keine zusätzliche Befestigung notwendig ist, wird das Auswechseln von einzelnen Filtermodulen erleichtert.

Weitere Merkmale und Einzelheiten der vorliegenden Erfindung ergeben sich aus der nachfolgenden Figurenbeschreibung. Dabei zeigen:
- Fig. 1a, 1b: ein erfindungsgemäßes Filtermodul in perspektivischer Ansicht und in Draufsicht,
- Fig. 2a: einen seitlichen Schnitt durch ein erfindungsgemäßes Flitermodul,
- Fig. 2b, 2c, 2d: Draufsichten auf die in Fig. 2a gekennzeichneten Ebenen,
- Fig. 3: einen seitlichen Schnitt durch ein Ausführungsbeispiel eines erfindungsgemäßen Filtermoduls,
- Fig. 4a: ein Filtersystem mit eingesetzten Filtermodulen
- Fig. 4b: einen seitlichen Schnitt durch das in Fig. 4a gezeigte Filtersystem und
- Fig.5: eine weitere Ausführungsform eines erfindungsgemäßen Filtersystems mit einem eingesetzten Filtermodul.

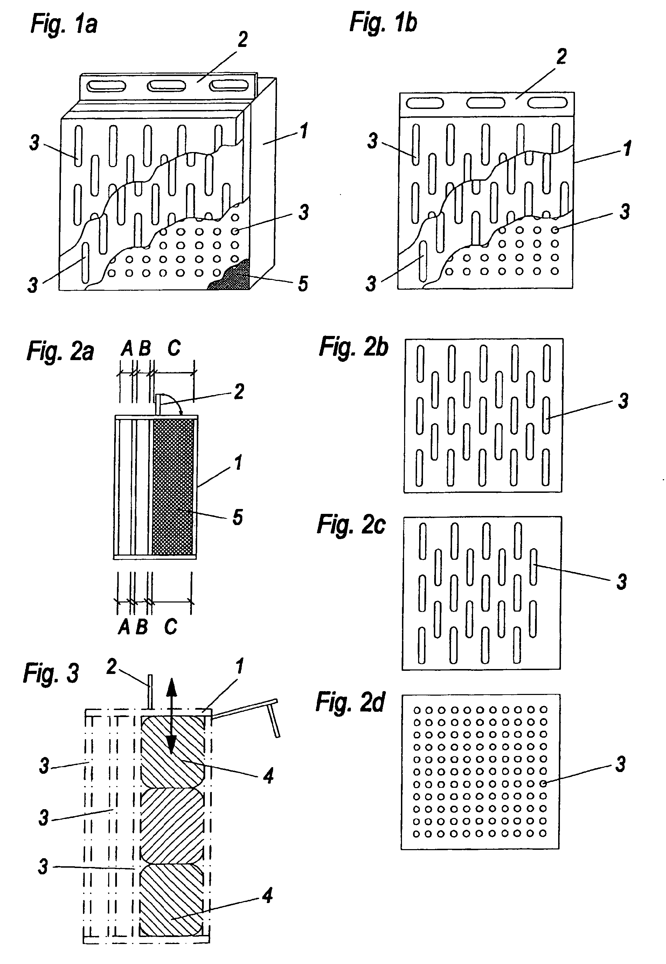

Fig. 1a zeigt in perspektivischer Sicht und in einem teilweisen Aufriss ein erfindungsgemäßes Filtermodul, bei dem der mehrkammerige Aufbau des Hohlkörpers 1 ersichtlich ist. Die Filteröffnungen 3 auf aufeinanderfolgenden Filterschichten ändern sich in ihrer Größe und sind versetzt zueinander angeordnet. Ebenfalls zu sehen ist lose in eine Filterkammer eingebrachtes Filtermaterial 5 sowie ein Griff 2 in herausgeschwenktem Zustand. In Fig. 1b ist nochmals die versetzte Lage der Filteröffnungen 3 auf den einzelnen Filterschichten zu sehen.

Fig. 2a zeigt einen seitlichen Schnitt durch ein Filtermodul gemäß den Fig. 1a und 1 b. Zu sehen sind der schwenkbare Griff 2 sowie das in einer Kammer lose eingebrachte Filtermaterial 5.

Fig. 2b zeigt eine Draufsicht, in der in Fig. 2a als A-A gekennzeichneten Ansicht. Fig. 2c zeigt eine analoge Ansicht entlang B-B und Fig. 2d zeigt eine analoge Ansicht entlang C-C. Zu sehen sind wieder die versetzte Anordnung der einzelnen Filteröffnungen 3 sowie deren veränderliche Größe.

Fig. 3 zeigt einen seitlichen Schnitt durch ein Ausführungsbeispiel eines erfindungsgemäßen Filtermoduls, aus dem wieder der mehrkammerige Aufbau ersichtlich ist. Zu sehen ist weiterhin, dass eine Kammer des Filtermoduls über den Griff 2 öffenbar ist und damit der Zugang zu dieser Kammer möglich ist. In die Kammer eingebracht sind drei Filterbeutel 4.

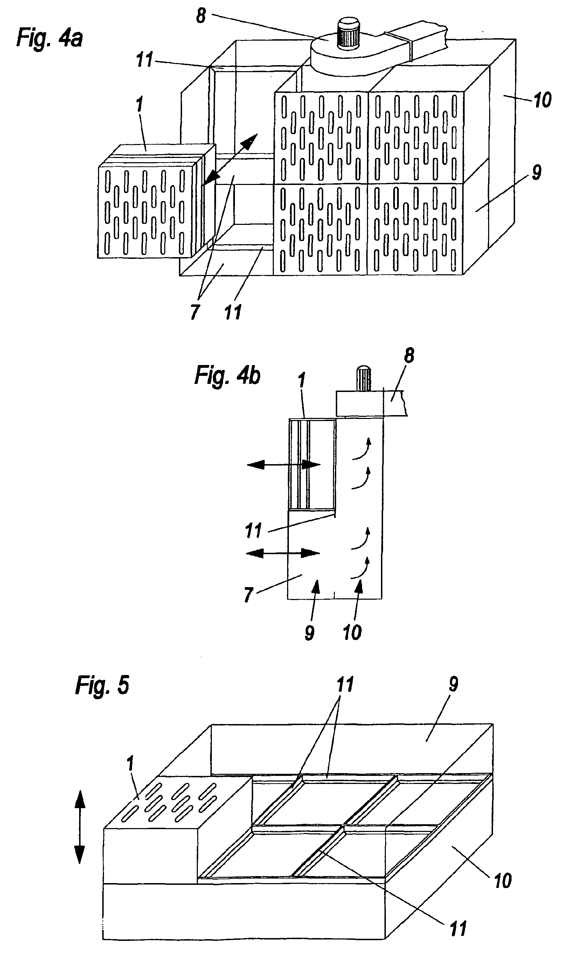

Fig. 4a zeigt in perspektivischer Sicht ein modular aufgebautes Filtersystem 6, bei dem einzelne erfindungsgemäße Filtermodule in den Korpus des Filtersystems 6 in den Einschüben 7 bis zu den Anschlägen 11 einschiebbar sind. Am Filtersystem angebracht ist ein Gebläse 8. Das Filtersystem ist in diesem Ausführungsbeispiel zweikammerig aufgebaut. In die eine Kammer 9 werden die Filtermodule eingesetzt, während die andere Kammer 10 mit dem Gebläse verbunden ist, wie aus Fig. 4b ersichtlich wird. Der Luftstrom wird dabei durch Pfeile angedeutet.

Fig. 5 zeigt eine weitere Ausführungsform eines erfindungsgemäßen Filtersystems 6, bei dem das Filtersystem 6 horizontal ausgebildet ist und die Filtermodule vertikal in die Einschübe 7 eingebracht werden. Die Einschübe 7 sind dabei wiederum durch Anschläge 11 begrenzt.

## Patentansprüche

1. Filtermodul in Form eines Hohlkörpers (1), wobei die Wände des Hohlkörpers (1) aus in einem Recycleprozess zerkleinerbaren und/oder auflösbaren, nichtmetallischen Material bestehen, wobei das zerkleinerbare und/oder auflösbare Material ein Papierstoff - vorzugsweise Karton, Papier oder Pappe - oder ein fasriges Material - vorzugsweise Holz oder Pressspanmaterial - ist, und wobei zumindest zwei annähernd parallel zueinander, in Richtung des eintretenden Luftstromes unmittelbar aufeinanderfolgend angeordnete Wände, Öffnungen (3) aufweisen, die auf in Richtung des eintretenden Luftstromes aufeinanderfolgenden Wänden kleiner werden und/oder versetzt zueinander angeordnet sind, **dadurch gekennzeichnet, dass** wenigstens eine Kammer des Hohlkörpers (1) über einen Griff (2) öffenbar ist, sodass der Zugang zu dieser Kammer möglich ist.

2. Filtermodul nach Anspruch 1, **dadurch gekennzeichnet, dass** das zerkleinerbare und/oder auflösbare Material ein biologisch abbaubares Material ist.

3. Filtermodul nach einem der Ansprüche 1 oder 2, **dadurch gekennzeichnet, dass** der Hohlkörper (1) annähernd quaderförmig ist.

4. Filtermodul nach einem der Ansprüche 1 bis 3, **dadurch gekennzeichnet, dass** die kleinste Seite des Hohlkörpers (1) annähernd halb so groß wie seine größte Seite ist.

5. Filtermodul nach einem der Ansprüche 1 bis 4, **dadurch gekennzeichnet, dass** es in einem Faltvorgang herstellbar ist.

6. Filtermodul nach einem der Ansprüche 1 bis 5, **dadurch gekennzeichnet, dass** an zumindest einer Außenseite des Hohlkörpers (1) wenigstens ein Griff (2) versenkbar oder herausschwenkbar angebracht und/oder ausgebildet ist.

7. Filtermodul nach einem der Ansprüche 1 bis 6, **dadurch gekennzeichnet, dass** wenigstens eine Wand des Hohlkörpers zumindest teilweise brandschutzimprägniert ist.

8. Filtermodul nach einem der Ansprüche 1 bis 7, **dadurch gekennzeichnet, dass** in zumindest eine Kammer des Hohlkörpers zumindest ein Filtereinsatz (4) einbringbar ist.

9. Filtermodul nach einem der Ansprüche 1 bis 8, **dadurch gekennzeichnet, dass** zumindest ein Filtereinsatz (4) in wenigstens eine, in Richtung des Luftstromes nach den zumindest zwei annähernd parallel zueinander angeordneten Wänden, angeordneten Kammer einbringbar ist.

10. Filtermodul nach Anspruch 8 oder 9, **dadurch gekennzeichnet, dass** der Filtereinsatz (4) ein mit Filtermaterial gefüllter Beutel ist.

11. Filtermodul nach einen der Ansprüche 1 bis 10, **dadurch gekennzeichnet, dass** zumindest eine Kammer des Hohlkörpers wenigstens teilweise mit Filtermaterial (5) gefüllt ist.

## Claims

1. A filter module in the form of a hollow body (1), wherein the walls of the hollow body (1) consist of a non-metallic material which can be reduced and/or dissolved in a recycling process, wherein the reducible and/or dissolvable material is a paper product - preferably board, paper or cardboard - or a fibrous material - preferably wood or pressboard material -, and wherein at least two successive walls being arranged roughly parallel to each other in the direction of the incoming air flow have openings (3) which are arranged to be smaller and/or arranged offset relative to each other in the direction of the incoming air flow, **characterised in that** at least one chamber of the hollow body (1) can be opened via a handle (2) so that access to this chamber is made possible.

2. The filter module according to claim 1, **characterised in that** the reducible and/or dissolvable material is a biologically degradable material.

3. The filter module according to claim 1 or 2, **characterised in that** the hollow body (1) is roughly square.

4. The filter module according to one of the claims 1 to 3, **characterised in that** the smallest side of the hollow body (1) is roughly half the size of the largest side of the hollow body (1).

5. The filter module according to one of the claims 1 to 4, **characterised in that** it can be formed by a folding process.

6. The filter module according to one of the claims 1 to 5, **characterised in that** at least one handle (2) is arranged and/or formed on at least one outer wall of the hollow body (1) so as to be able to be countersunk or swung out.

7. The filter module according to one of the claims 1 to 6, **characterised in that** at least one wall of the hollow body (1) is at least partially fire-protection impregnated.

8. The filter module according to one of the claims 1 to 7, **characterised in that** at least one filter element (4) can be inserted into at least one chamber of the hollow body (1).

9. The filter module according to one of the claims 1 to 8, **characterised in that** at least one filter element (4) can be inserted in at least one chamber being arranged in a direction downstream of the at least two walls which are arranged roughly parallel to each other.

10. The filter module according to claim 8 or 9, **characterised in that** the filter element (4) is a bag filled with filter material.

11. The filter module according to one of the claims 1 to 10, **characterised in that** at least one chamber of the hollow body (1) is at least partially filled with filter material (5).

## Revendications

1. Module filtrant se présentant sous la forme d'un corps creux (1), les parois du cors creux (1) étant composées d'un matériau non métallique, fragmentable et/ou soluble dans un processus de recyclage, le matériau fragmentable et/ou soluble étant un matériau à base de papier - de préférence du carton, du papier ou du cartonné - ou un matériau fibreux - de préférence du bois ou un matériau de type presspahn -, et où au moins deux parois à peu près parallèles l'une à l'autre, disposées directement l'une sur l'autre et en se suivant dans la direction du flux d'air entrant, présentent des ouvertures (3), devenant plus petites dans la direction du flux d'air entrant des parois disposées l'une sur l'autre et en se suivant et/ou disposées en décalage les unes par rapport aux autres, **caractérisé en ce qu'**au moins une chambre du corps creux (1) est susceptible d'être ouverte par l'intermédiaire d'une poignée (2), de manière que l'accès à cette chambre soit possible.

2. Module filtrant selon la revendication 1, **caractérisé en ce que** le matériau fragmentable et/ou soluble est un matériau biologiquement dégradable.

3. Module filtrant selon l'une des revendications 1 ou 2, **caractérisé en ce que** le corps creux (1) est à peu près de forme parallélépipédique.

4. Module filtrant selon l'une des revendications 1 à 3, **caractérisé en ce que** le côté plus petit du corps creux (1) est de taille à peu près de la moitié de son côté le plus gros.

5. Module filtrant selon l'une des revendications 1 à 4, **caractérisé en ce qu'**il est susceptible d'être fabriqué en un processus de pliage.

6. Module filtrant selon l'une des revendications 1 à 5, **caractérisé en ce qu'**au moins une poignée (2) est montée et/ou réalisée de manière à pouvoir être escamotée ou déployée par pivotement en au moins une face extérieure du corps creux (1).

7. Module filtrant selon l'une des revendications 1 à 6, **caractérisé en ce qu'**au moins une paroi du corps creux est au moins partiellement imprégnée d'un produit ignifuge.

8. Module filtrant selon l'une des revendications 1 à 7, **caractérisé en ce qu'**au moins un insert filtrant (4) est susceptible d'être introduit dans au moins une chambre du corps creux.

9. Module filtrant selon l'une des revendications 1 à 8, **caractérisé en ce qu'**au moins un insert filtrant (4) est susceptible d'être introduit dans au moins une chambre, disposée en aval des au moins deux parois, disposées parallèlement l'une à l'autre, dans la direction du flux d'air.

10. Module filtrant selon la revendication 8 ou 9, **caractérisé en ce que** l'insert filtrant (4) est un sac rempli de matériau filtrant.

11. Module filtrant selon l'une des revendications 1 à 10, **caractérisé en ce qu'**au moins une chambre du corps creux est remplie au moins partiellement de matériau filtrant (5).
